# EUROPÄISCHE PATENTSCHRIFT

(11) **EP 0 752 789 B1**
(45) Veröffentlichungstag und Bekanntmachung des Hinweises auf die Patenterteilung: **16.08.2006**
(21) Anmeldenummer: 96110362.9
(22) Anmeldetag: 27.06.1996
(51) Int. Cl.: H04N 7/64, H04N 7/62

(54) **Verfahren, Encoder und Decoder zur Resynchronisierung auf einen fehlerbehafteten Videodatenstrom**
Method, encoder and decoder for re-synchronisation in an erroneous video data stream
Méthode, codeur et décodeur pour la résynchronisation dans un flux de données vidéo erronées

(30) Priorität: 07.07.1995 DE 19524808
(43) Veröffentlichungstag der Anmeldung: 08.01.1997
(73) Patentinhaber: DEUTSCHE THOMSON-BRANDT GMBH, 78048 Villingen-Schwenningen (DE)
(72) Erfinder: Adolph, Dirk, 30952 Ronnenberg (DE)
(74) Vertreter: Wördemann, Hermes

(56) Entgegenhaltungen:
- EP-A- 0 634 868
- EP-A- 0 651 584
- US-A- 5 168 356
- "ITU-T RECOMMENDATION H.262, INTERNATIONAL STANDARD ISO/IEC 13818.2 MPEG-2 VIDEO. TRANSMISSION OF NON-TELEPHONE SIGNALS. INFORMATION TECHNOLOGY - GENERIC CODING OF MOVING PICTURES AND ASSOCIATED AUDIO INFORMATION: VIDEO" ITU-T TELECOMMUNICATION STANDARIZATION SECTOR OF ITU, GENEVA, CH, 1. Juli 1995 (1995-07-01), Seiten 1-211, XP000198491
- MAGAL H ET AL: "A robust error resilient video compression algorithm" , MILITARY COMMUNICATIONS CONFERENCE, 1994. MILCOM '94. CONFERENCE RECORD, 1994 IEEE FORT MONMOUTH, NJ, USA 2-5 OCT. 1994, NEW YORK, NY, USA,IEEE, US, PAGE(S) 247-251 XP010149782 ISBN: 0-7803-1828-5 * Absätze [3.2.2],[0004] *

## Beschreibung

Die Erfindung betrifft ein Verfahren, einen Encoder und Decoder zur Resynchronisierung auf einen fehlerbehafteten Datenstrom, der insbesondere aus digitalen Videosignalen bestehen kann.

### Stand der Technik

Bei der Übertragung digitaler Daten können durch Kanalstörungen Teile dieser Daten irreversibel zerstört werden. So entstandene Lücken im Bitstrom müssen indiziert und der jeweilige Decoder resynchronisiert werden. Bei Verwendung einer Kodierung nach dem MPEG2-Standard ist der Zeitpunkt der Resynchronisierung stark vom Inhalt der verlorenen Bitstromelemente abhängig, wobei es durch das Auftreten von Folgefehlern zu unerwünscht großen Ausfallzeiten im verwendeten Decoder kommen kann.

Eine Möglichkeit zur Vermeidung solcher unerwünscht langen Resynchronisierungszeiten besteht in der Anpassung der Kanalcodierung. Dazu muß der MPEG-2 Bitstrom analysiert und besonders wichtige Elemente des Bitstromes mit höherem Transportschutz versehen werden. Dieses Verfahren ist wegen der aufwendigen Bitstromanalyse und des zusätzlichen Fehlerschutzes jedoch nicht immer möglich oder wirtschaftlich.

### Erfindung

Der Erfindung liegt die Aufgabe zugrunde, ein Verfahren zur Modifizierung eines Datenstroms anzugeben, um eine kürzere Resynchronisierungszeit und eine Verringerung von Folgefehlern zu erzielen. Diese Aufgabe wird durch das in Anspruch 1 angegebene Verfahren gelöst.

Der Erfindung liegt die weitere Aufgabe zugrunde, einen Encoder und Decoder zur Anwendung des erfindungsgemäßen Verfahrens anzugeben. Diese Aufgabe wird durch den in Anspruch 9 angegebenen Encoder und den in Anspruch 11 angegebenen Decoder gelöst.

Im MPEG2-Standard ist die Syntax und Semantik eines zu übertragenden Bitstroms für die generische Quellencodierung von Bewegtbildern und zugehöriger Ton-/Textinformation festgelegt. Um die Basiselemente bei der Videoquellencodierung voneinander zu trennen und damit z.B. geeignete Zugriffsmechanismen zur Verfügung zu stellen, werden Hierarchien in Form von insgesamt sechs Layern eingeführt. Für jeden Picture-Layer, d.h. jedes Bild, wird hierbei eine gewisse Anzahl von Slices übertragen. Diese sogenannten Slice-Layer bieten die niedrigste Ebene für eine Resynchronisierung des Decoders.

Fallen während der Übertragung über einen gestörten Kanal Daten aus, so können davon auch die für die Decodierung wichtigen Picture-Start-Codes oder Extension-Start-Codes des Picture-Layers betroffen sein. Zwar wird sich der Decoder in einem solchen Fall auf den Slice-Start-Code des folgenden Slice-Layers resynchronisieren, aber er wird die Daten nicht mehr decodieren können, weil wichtige Informationen wie z. B. die zeitliche Referenz des Bildes, der Bildtyp (I-, P-, B-Frame) oder auch wichtige Parameter zur Decodierung von Bewegungsvektoren falsch sind.

Das hat zur Folge, daß der Decoder mindestens ein Bild nicht dekodieren kann. Zusätzlich können noch Folgefehler während der Decodierung auftreten, falls später zu prädizierende Bilder auf dem fehlenden Bild aufbauen. Dieses kann im Extremfall dazu führen, daß der Verlust des Picture-Headers eines I-Frames Bildstörungen in allen folgenden Bildern bis zum nächsten I-Frame verursacht. Bei einer Größe der Group-of-Pictures von N=12 und einer 50 Hz Bildwiederholrate bedeutet dieses Störungen über einen Zeitraum von 0.48 Sekunden.

Erfindungsgemäß werden daher in den Slice-Header an vorteilhafter Stelle Zusatzinformationen eingefügt, welche die wichtigsten Informationen des jeweiligen Bildes enthalten und damit eine Decodierung auch beim Verlust des Picture-Start-Codes oder Extension-Start-Codes erlauben, wobei die Anzahl der Bits dieser Zusatzinformationen so gering wie möglich gehalten wird, um die zusätzlich zu übertragende Datenmenge zu minimieren.

Im Prinzip besteht das erfindungsgemäße Verfahren zum Ermöglichen einer decoderseitigen Resynchronisierung auf einen fehlerbehafteten Datenstrom, der zum Zweck der Datenkomprimierung in Form einer hierarchischen Organisation von verschiedenen Layern kodiert wird, darin, daß in mindestens einen untergeordneten Layer Zusatzinformationen aus mindestens einem oder über die Beschaffenheit von mindestens einem übergeordneten Layer eingefügt werden, wobei die Zusatzinformationen für die Resynchronisation nutztbar sind.

Im Prinzip besteht das erfindungsgemäße Verfahren zur Resynchronisierung auf einen fehlerbehafteten Datenstrom, der encoderseitig zum Zweck der Datenkomprimierung in Form einer hierarchischen Organisation von verschiedenen Layern kodiert worden ist, darin, daß die in mindestens einem untergeordneten Layer enthaltenen Zusatzinformationen aus mindestens einem oder über die Beschaffenheit von mindestens einem übergeordneten Layer bestimmt und für die Resynchronisation genutzt werden.

Dieses Verfahren kann z. B. dann angewendet werden, wenn der Datenstrom dem MPEG-Standard, insbesondere dem MPEG2-Standard, entspricht.

Vorteilhaft enthält dann der Slice-Layer Zusatzinformationen über den Picture-Layer, wobei sich die Zusatzinformationen im Header des Slice-Layers befinden.

Vorzugsweise werden hierbei die Zusatzinformationen nur in I- und P-Frames verwendet, wobei vorteilhaft die Zusatzinformationen nur in jeder zweiten oder dritten Makroblockzeile übertragen werden.

Besonders vorteilhaft betreffen die Zusatzinformationen die zeitliche Referenz des Bildes und/oder den Bildtyp (I-, P-B-Frame) und/oder wichtige Parameter zur Decodierung von Bewegungsvektoren.

Vorzugsweise werden die Zusatzinformationen derart gewählt, daß die Anzahl der hierfür benötigten Bits im Vergleich zu der Anzahl der Bits für die entsprechenden Informationen in den übergeordneten Layern reduziert ist, um die zusätzlich zu übertragende Datenmenge so gering wie möglich zu halten.

Im Prinzip besteht der erfindungsgemäße Encoder für ein Verfahren zum Ermöglichen einer decoderseitigen Resynchronisierung auf einen fehlerbehafteten Datenstrom, der zum Zweck der Datenkomprimierung in Form einer hierarchischen Organisation von verschiedenen Layern kodiert wird und mit Mitteln zur Kompression der Daten versehen ist, darin, daß Mittel vorgesehen sind, in denen für die untergeordneten Layer Zusatzinformationen über die Beschaffenheit der ihnen übergeordneten Layer generiert oder bestimmt werden, wobei die Zusatzinformationen für die decoderseitige Resynchronisation nutztbar sind und die komprimierten Daten und die Zusatzinformationen zu einem Datenstrom zusammengefügt werden.

Vorteilhaft sind bei dem Encoder bei den Mitteln zur Kompression der Videodaten nach Mitteln zur Berechnung der Korrelation aufeinanderfolgender Bilder sowie der Korrelation innerhalb eines Bildes ferner Mittel zur Huffman-Kodierung angeordnet, wobei die Huffman-kodierten Daten einem Pufferspeicher zugeführt werden, und die Mittel, in denen für die untergeordneten Layer Zusatzinformationen über die Beschaffenheit der ihnen übergeordneten Layer generiert werden, zwischen einer Encodereinheit zur Generierung von Header-Parametern und dem Pufferspeicher angeordnet sind.

Im Prinzip besteht der erfindungsgemäße Decoder für ein Verfahren zur Resynchronisierung auf einen fehlerbehafteten Datenstrom, der encoderseitig zum Zweck der Datenkomprimierung in Form einer hierarchischen Organisation von verschiedenen Layern kodiert worden ist und mit Mitteln zur Dekompression des Datenstroms versehen ist, darin, daß Mittel vorgesehen sind, in denen für die untergeordneten Layer Zusatzinformationen über die Beschaffenheit der ihnen übergeordneten Layer regeneriert werden, wobei die Zusatzinformationen für die Resynchronisation genutzt werden.

Vorteilhaft umfassen beim Decoder die Mittel zur Dekompression der Videodaten Mittel zur Berechnung der Korrelation aufeinanderfolgender Bilder sowie der Korrelation innerhalb eines Bildes und Mittel zur Huffman-Dekodierung, wobei der Datenstrom vor den Mitteln zur Huffman-Dekodierung auch einer Encodereinheit, in der Header-Parameter bestimmt werden, sowie den Mitteln, in denen für die untergeordneten Layer Zusatzinformationen über die Beschaffenheit der ihnen übergeordneten Layer regeneriert werden, zugeführt wird.

### Zeichnungen

Anhand der Zeichnungen werden Ausführungsbeispiele der Erfindung beschrieben. Diese zeigen in:
- Fig. 1: eine mögliche Slice-Struktur eines Bildes,
- Fig. 2: die Slice-Syntax mit dem Syntaxelement extra_information_slice,
- Fig. 3: den zusätzlichen Informationsinhalt des Slice-Headers,
- Fig. 4: ein Blockdiagramm eines Encoders, welcher die Kodierung des modifizierten Slice-Headers mit einschließt,
- Fig. 5: ein Blockdiagramm eines Decoders, welcher die Dekodierung des modifizierten Slice-Headers ermöglicht,

### Ausführungs-Beispiele

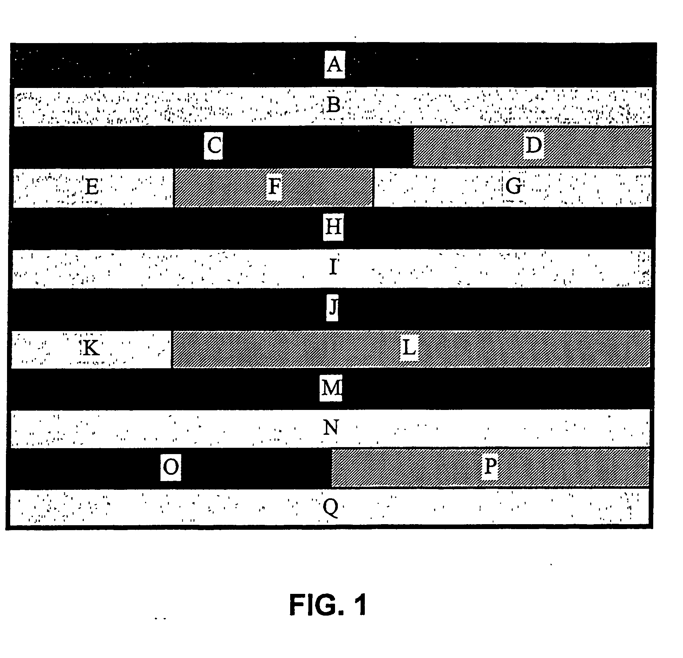

In Fig. 1 ist exemplarisch die Slice-Struktur eines Bildes gezeigt, wobei die unterschiedlichen Slices durch verschiedene Buchstaben A... Q gekennzeichnet sind. Das Bild ist in diesem Fall lückenlos mit Slices überdeckt (Restricted-Slice-Structure). Jeder Slice ist entsprechend der Video-Bitstream-Slice-Syntax der MPEG2-Spezifikation ("Generic Coding of Moving Pictures and Associated Audio"; ITU-T Recommendation H.262; ISO/IEC 13818-2; International Standard; 9 Nov 1994) aufgebaut.

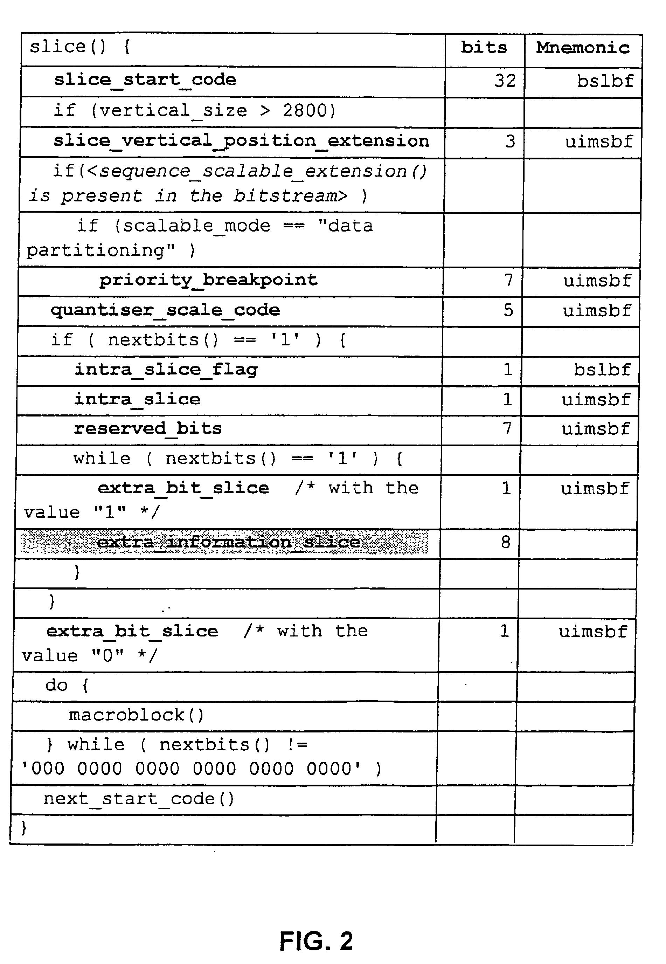

Die Slice-Struktur ist in Fig. 2 dargestellt. Jeder Slice setzt sich aus einem mehrere Syntaxelemente umfassenden Slice-Header und dem in Macroblöcken angeordneten jeweiligen Bildinhalt zusammen. Der Slice-Header wird durch das Element slice_start_code eingeleitet, der 32 Bit lang ist und mit einer Folge von 23 Nullen beginnt, auf die sich der Decoder synchronisieren kann. Das ebenfalls im Slice-Header befindliche Syntaxelement extra_information_slice kann nun dazu verwendet werden, wichtige Informationen aus dem Picture-Header oder Picture-Extensions ebenfalls aufzunehmen. Tritt während der Übertragung der Verlust eines Picture-Headers oder von Picture-Extensions auf, so ist der Decoder trotzdem in der Lage, den Rest des Bildes korrekt zu decodieren, da die dazu notwendigen Informationen im Slice-Header enthalten sind.

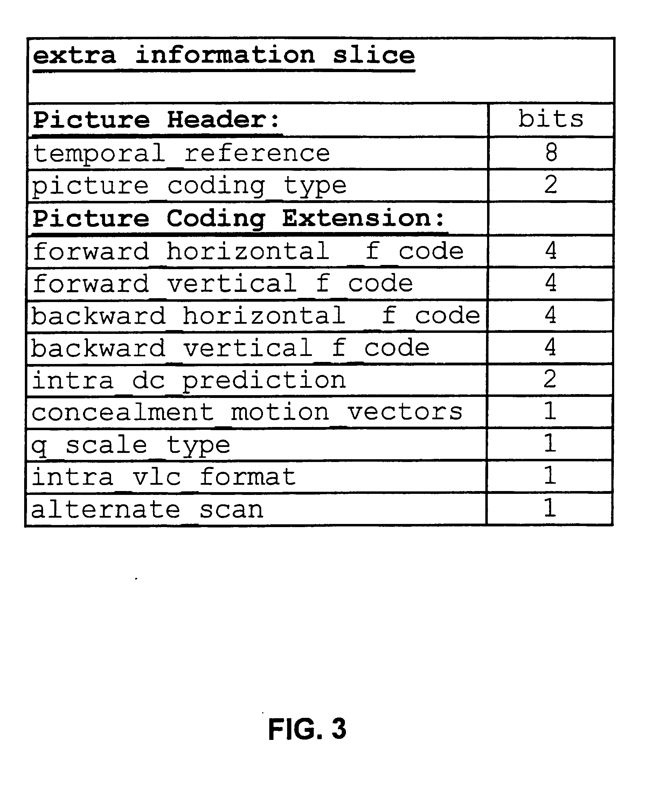

Ein Beispiel für die im Slice-Header zusätzlich unterzubringende Information ist in Fig. 3 aufgeführt. Aus dem Picture-Header werden hierbei das Syntaxelement temporal_reference, bei dem eine Integerzahl die zeitliche Anordnung eines kodierten Bildes angibt, und das Syntaxelement picture_coding_type, welches angibt, ob das Bild I-, P- oder B-kodiert ist, benötigt. Um die zusätzlich zu übertragende Datenmenge so gering wie möglich zu halten, kann dabei vorteilhaft die Anzahl der übertragenen Bits reduziert werden. So reichen für den Parameter temporal_reference im Slice-Header statt 10 Bits auch 8 Bits aus. Für den Parameter picture_coding_type kann die Bitzahl von 3 auf 2 verringert werden, da zur Zeit ein Bit für zukünftige Anwendungen reserviert ist und im Slice-Header nicht benötigt wird. Auch von der Picture-Coding-Extension müssen im Slice-Header nur die wichtigsten Parameter aufgenommen werden. Es sind damit im Slice-Header 46 zusätzliche Bits zu übertragen, sodaß der erweiterte Slice-Header 32+46 Bits lang ist.

Wird der erweiterte Slice-Header in jedem Slice übertragen, so kann der entstandene Overhead die Bildqualität des decodierten Videos verschlechtern. Vorteilhaft wird daher ein erweiterter Slice-Header nur in I- und P-Frames übertragen. Eine weitere Reduktion des Overheads kann erreicht werden, indem der erweiterte Slice-Header nur in jeder zweiten oder dritten Makroblockzeile übertragen wird.

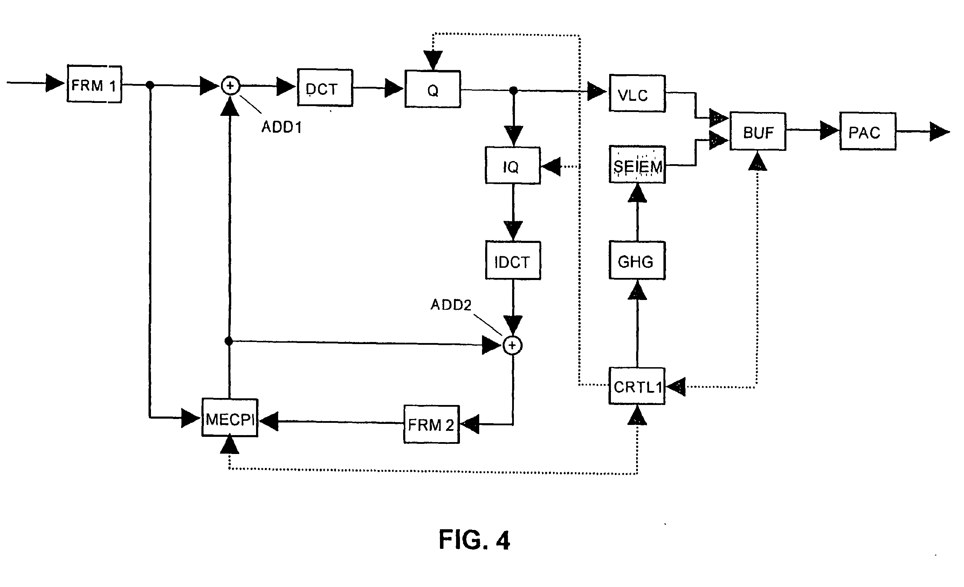

Das Blockdiagramm eines Encoders, der die Zusatzinformationen in den Slice-Header einfügt, ist in Fig. 4 dargestellt. Die Videodaten werden zunächst in einen ersten Bildspeicher FRM1 eingelesen. Dann werden die Daten in der Encodereinheit DCT einer diskreten Cosinustransformation unterzogen, um die Korrelationen innerhalb eines Bildes für die Datenkompremierung zu nutzen. Das Ergebnis der DCT wird dann im Quantisierer Q quantisiert.

Zusätzlich können in einer Differenz-Pulscodemodulation (DPCM) ferner die Korrelationen zwischen aufeinanderfolgenden Bildern genutzt werden, wobei in einer Rückkopplungsschleife das quantisierte DPCM-Bild berechnet wird. Hierzu wird in der Einheit IQ zunächst eine inverse Quantisierung und dann in IDCT eine inverse diskrete Cosinustransformation durchgeführt. Die Anwendung von Verfahren zur Bewegungsschätzung und Bewegungskompensation in MECPI mit Hilfe des Bildspeichers FRM2 ermöglicht dann eine Prädiktion des Folgebildes. Das Ergebnis dieser Prädiktion wird dann an den subtraktiven Eingang des Addierers ADD1 angelegt, um das Differenzbild zwischen dem aktuellen Bild und dem Ergebnis der Prädiktion zu ermitteln.

Die Ausgangswerte der Quantisierung werden in VLC mit variabler Länge nach Huffman kodiert. Diese Daten werden mit den erforderlichen Header-Parametern aus der Header-Encodereinheit GHG, sowie den erfindungsgemäß gestalteten extra_information_slices, die in der Einheit SEIEM generiert werden, zu einem Bitstrom zusammengefügt. Da die erzeugte Datenrate in Abhängigkeit vom jeweiligen Bildinhalt variiert, erfolgt in einem Pufferspeicher BUF eine Kompensation der Schwankungen, um eine Anpassung an die konstante Rate des Übertragungskanals zu erreichen. Droht die Kapazität des Pufferspeichers nicht auszureichen, so wird eine gröbere Quantisierung gewählt, um die Datenrate zu senken. Hierfür wird in der Einheit CTRL1 die nötige Quantisierungsrate des Quantisierers Q berechnet, wobei die aktuelle Rate auch den Einheiten MECPI und GHG mitgeteilt wird. Abschließend werden die Daten in PAC in einen Multiplexrahmen eingebunden.

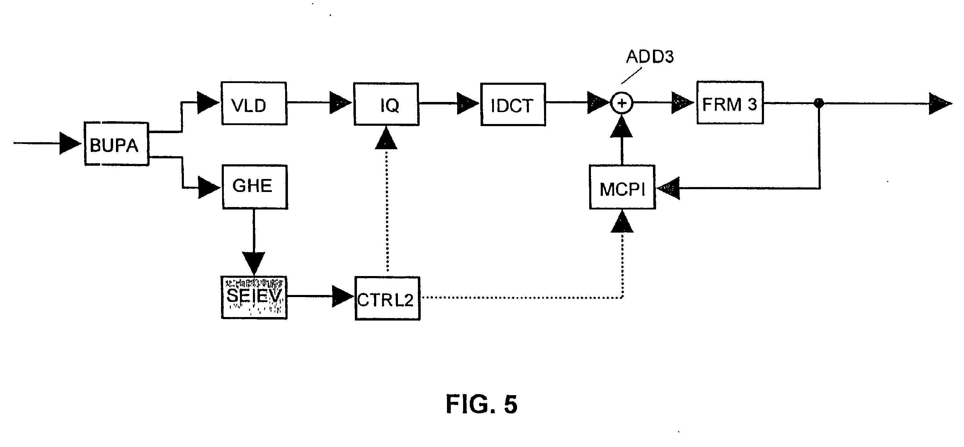

Ein Blockdiagramm eines Decoders, der den erfindungsgemäßen Slice-Header auswertet, ist in Fig. 5 dargestellt. Zunächst wird in einer Einheit BUPA, die aus einem Pufferspeicher und einem Parser besteht, aus dem übertragenen Signal der reine Videodatenstrom zurückgewonnen. Dieser wird dann einerseits der Header-Decodereinheit GHE zugeführt, die aus dem Videodatenstrom die Headerinformationen ermittelt. In einer darauffolgenden Einheit SEIEV werden die zusätzlichen Parameter in den extra_information_slices bestimmt. Beide Informationen werden dann einer Kontrolleinheit CTRL2 zugeführt. Zum anderen wird in der Einheit VLD die Huffmancodierung des Videodatenstroms rückgängig gemacht. Dann erfolgt in IQ eine inverse Quantisierung, wobei die Quantisierungsrate von der Einheit CTRL2 vorgegeben wird, und in IDCT eine inverse diskrete Cosinustransformation.

Zusätzlich können von der Einheit CTRL2 die übermittelten Bewegungsvektoren einer Decodereinheit MCPI übermittelt werden, um die Prädiktion zu ermöglichen. Mit Hilfe eines Addierers ADD3 erfolgt dann eine Korrektur der Prädiktion um das Differenzbild. Das Ergebnis wird dann im Bildspeicher FRM3 zwischengespeichert, um für die nächste Prädiktion zur Verfügung zu stehen.

Durch diese Maßnahme ist ein spezieller Decoder, der die gelieferte Zusatzinformation mit z.B. verkürzten Wortbreiten interpretieren kann, bei Resynchronisierung auf einen erweiterten Slice Header jederzeit in der Lage, den Rest des Bildes korrekt zu decodieren. Dieses ist auch dann möglich, wenn der Picture-Header und/oder die Picture-Header-Extension durch Übertragungsfehler nicht zur Verfügung stehen. Durch Einfügen von erweiterten Slice-Headern in den MPEG-2 Bitstrom werden lange Resynchornisierungszeiten vermieden und Folgefehler der Decodierung durch fehlerhafte Prädiktionen verringert. Ein Standard Decoder, der nicht in der Lage ist die Zusatzinformation zu interpretieren, bleibt durch diese unbeeinflußt.

Die zur Resynchronisierung benötigten Zusatzinformationen können auch in mehr als einer untergeordneten Layer-Ebene angeordnet sein.

Die Erfindung kann z.B. für digitale Fernsehsysteme wie DVB und HDTV, aber auch für digitale Speichermedien wie DVD verwendet werden.

## Patentansprüche

1. Verfahren zum Enkodieren eines Videodatenstroms, der zum Zweck der Datenkomprimierung in Form einer hierarchischen Organisation von verschiedenen Layern kodiert (DCT, Q, VLC) wird, wobei die verschiedenen Layer einen Picture Layer und einen Slice-Layer umfassen und für ein Bild eine gewisse Anzahl von Slices übertragen wird, **dadurch gekennzeichnet, daß** in den Slice-Layer Zusatzinformationen aus dem oder über die Beschaffenheit von dem Picture-Layer eingefügt (SEIEM) werden, wobei die Zusatzinformationen für die Resynchronisation nutzbar sind.

2. Verfahren zum Dekodieren eines Videodatenstroms, der zum Zweck der Datenkomprimierung in Form einer hierarchischen Organisation von verschiedenen Layern kodiert (VLD, IQ, IDCT) worden ist, wobei die verschiedenen Layer einen Picture Layer und einen Slice-Layer umfassen und für ein Bild eine gewisse Anzahl von Slices empfangen wird, **dadurch gekennzeichnet, daß** die in dem Slice-Layer enthaltenen Zusatzinformationen aus dem, oder über die Beschaffenheit von dem Picture-Layer bestimmt (SEIEV) und für die Resynchronisation genutzt werden.

3. Verfahren nach einem der Ansprüche 1 oder 2, **dadurch gekennzeichnet, daß** der Datenstrom dem MPEG-Standard, insbesondere dem MPEG2-Standard, entspricht.

4. Verfahren nach Anspruch 3, **dadurch gekennzeichnet, daß** sich die Zusatzinformationen im Header des Slice-Layers befinden.

5. Verfahren nach einem der Ansprüche 3 oder 4, **dadurch gekennzeichnet, daß** die Zusatzinformationen nur in I- und P-Frames verwendet werden.

6. Verfahren nach einem der Ansprüche 3 bis 5, **dadurch gekennzeichnet, daß** die Zusatzinformationen nur in jeder zweiten oder dritten Makroblockzeile übertragen werden.

7. Verfahren nach einem der Ansprüche 3 bis 6, **dadurch gekennzeichnet, daß** die Zusatzinformationen die zeitliche Referenz des Bildes und/oder den Bildtyp (I, P-, B-Frame) und/oder wichtige Parameter zur Decodierung von Bewegungsvektoren betreffen.

8. Verfahren nach einem der Ansprüche 3 bis 7, **dadurch gekennzeichnet, daß** die Zusatzinformationen derart gewählt werden, daß die Anzahl der hierfür benötigten Bits im Vergleich zu der Anzahl der Bits für die entsprechenden Informationen in den übergeordneten Layern reduziert ist, um die zusätzlich zu übertragende Datenmenge so gering wie möglich zu halten.

9. Vorrichtung zum Enkodieren eines Videodatenstroms, mit Mitteln (DCT, Q, VLD) zur Datenkomprimierung in Form einer hierarchischen Organisation von verschiedenen Layern, wobei die verschiedenen Layer einen Picture Layer und einen Slice-Layer umfassen und für ein Bild eine gewisse Anzahl von Slices übertragen wird, **dadurch gekennzeichnet, daß** Mittel (SEIEM) vorgesehen sind, in denen für den Slice-Layer Zusatzinformationen über die Beschaffenheit des Picture-Layers generiert oder bestimmt werden, wobei die Zusatzinformationen für die Resynchronisation nutzbar sind und die komprimierten Daten und die Zusatzinformationen zu einem Datenstrom zusammengefügt werden.

10. Vorrichtung nach Anspruch 9, **dadurch gekennzeichnet, daß** bei den Mitteln zur Kompression der Videodaten nach Mitteln zur Berechnung der Korrelation aufeinanderfolgender Bilder sowie der Korrelation innerhalb eines Bildes ferner Mittel zur Huffman-Kodierung (VLC) angeordnet sind, wobei die Huffman-kodierten Daten einem Pufferspeicher (BUF) zugeführt werden, und daß die Mittel (SEIEM), in denen für die untergeordneten Layer Zusatzinformationen über die Beschaffenheit der ihnen übergeordneten Layer generiert werden, zwischen einer Encodereinheit (GHG) zur Generierung von Header-Parametern und dem Pufferspeicher (BUF) angeordnet sind.

11. Vorrichtung zum Dekodieren eines Videodatenstroms mit Mitteln (VLD, IQ, IDCT) zur Dekompression des Videodatenstroms, der in Form einer hierarchischen Organisation von verschiedenen Layern kodiert worden ist, wobei die verschiedenen Layer einen Picture Layer und einen Slice-Layer umfassen und für ein Bild eine gewisse Anzahl von Slices empfangen wird, **dadurch gekennzeichnet, daß** Mittel (SEIEV) vorgesehen sind, um die in dem Slice-Layer enthaltenen Zusatzinformationen über die Beschaffenheit des Picture-Layers zu bestimmen, wobei die Zusatzinformationen für die Resynchronisation genutzt werden.

12. Vorrichtung nach Anspruch 11, **dadurch gekennzeichnet, daß** die Mittel zur Dekompression der Videodaten Mittel zur Berechnung der Korrelation aufeinanderfolgender Bilder sowie der Korrelation innerhalb eines Bildes und Mittel zur Huffman-Dekodierung (VLD) umfassen, und vor den Mitteln zur Huffman-Dekodierung (VLD) der Datenstrom auch einer Encodereinheit (GHE), in der Header-Parameter bestimmt werden, sowie den Mitteln (SEIEV), in denen für die untergeordneten Layer Zusatzinformationen über die Beschaffenheit der ihnen übergeordneten Layer regeneriert werden, zugeführt wird.

## Claims

1. Method for encoding a video data stream, which for the purpose of data compression is coded in form of a hierarchical organization of different layers (DCT, Q, VLC), whereby the different layers comprise a picture layer and a slice layer and a certain number of slices are transmitted for a picture, **characterized in that** additional information from the picture layer or its composition is inserted into the slice layer (SEIEM), whereby the additional information is usable for the resynchronization.

2. Method for decoding a video data stream, which for the purpose of data compression has been coded in form of a hierarchical organization of different layers (VLD, IQ, IDCT), whereby the different layers comprise a picture layer and a slice layer and a certain number of slices are received for a picture, **characterized in that** the additional information contained in the slice layer is determined (SEIEV) from the picture layer or its composition, and are used for the resynchronization.

3. Method according to claims 1 or 2, **characterized in that** the data stream corresponds to the MPEG standard, in particular the MPEG2-Standard.

4. Method according to claim 3, **characterized in that** the additional information is in the header of the slice layer.

5. Method according to claim 3 or 4, **characterized in that** the additional information is used only in I- and P-frames.

6. Method according to one of the claims 3 to 5, **characterized in that** the additional information is transmitted only in every other or in every third macroblock line.

7. Method according to one of the claims 3 to 6, **characterized in that** the additional information concern the temporal reference of the picture and/or the picture type (I-, P-, B-Frame) and/or important parameters for the decoding of motion vectors.

8. Method according to one of the claims 3 to 7, **characterized in that** the additional information is selected in such a manner that the required number of bits is reduced compared with the number of bits for the corresponding information in the superordinate layers, in order to keep the additional amount of data to be transferred as small as possible.

9. Device for encoding a video data stream, having means (DCT, Q, VLD) for compression of the data in the form of a hierarchical organization of different layers, whereby the different layers comprise a picture layer and a slice layer and a certain number of slices are transmitted for a picture, **characterized in that** means (SEIEM) are provided in which additional information about the composition of the picture layer is generated or determined for the slice layer, whereby the additional information are usable for the resynchronization, and the compressed data and the additional information are joined together to form a data stream.

10. Device according to claim 9, **characterized in that** the means for compression of the video data, arranged after means for calculation of the correlation between successive frames and the correlation within a frame furthermore means for Huffman encoding (VLC), whereby the Huffman-encoded data are supplied to a buffer memory (BUF), and **in that** the means (SEIEM) in which for the subordinate layers additional information about the composition of the layers which are superordinate to them is generated, for the latter are arranged between an encoder unit (GHG) for generation of header parameters and the buffer memory (BUF).

11. Device for decoding a video data stream having means (VLC, IQ, IDCT) for decompression of the data stream the data stream being coded in form of a hierarchical organization of different layers, whereby the different layers comprise a picture layer and a slice layer and a certain number of slices are received for a picture **characterized in that** means (SEIEV) are provided which determine the additional information contained in the slice layer about the composition of the picture layer, whereby the additional information is used for the resynchronization.

12. Decoder according to claim 11, **characterized in that** the means for decompression of the video data comprise means for calculation of the correlation between successive pictures and the correlation within a frame and means for Huffman decoding (VLD) and before the means for Huffman decoding (VLD), the data stream is also supplied to an encoder unit (GHE), in which header parameters are determined, and to the means (SEIEV) in which additional information about the composition of the layers which are superordinate to the subordinate layers are regenerated for the latter.

## Revendications

1. Méthode pour coder un flux de données vidéo, qui est codé à des fins de compression de données sous la forme d'une organisation hiérarchique de différentes couches (DCT, Q, VLC), dans laquelle les différentes couches comprennent une couche d'images et une couche de sections, et pour une image un certain nombre de sections est transmis, **caractérisée en ce que** des informations supplémentaires, générées dans ou sur le type de la couche d'images, sont insérées dans la couche de sections (SEIEM), les informations supplémentaires pouvant être utilisées pour la resynchronisation.

2. Méthode pour décoder un flux de données vidéo, qui a été codé à des fins de compression de données sous la forme d'une organisation hiérarchique de différentes couches (VLD, IQ, IDCT), dans laquelle les différentes couches comprennent une couche d'images et une couche de sections, et pour une image un certain nombre de sections est reçu, **caractérisée en ce que** les informations supplémentaires contenues dans la couche de sections générées dans ou sur le type de la couche d'images sont déterminées (SEIEV) et utilisées pour la resynchronisation.

3. Méthode selon l'une des revendications 1 ou 2, **caractérisée en ce que** le flux de données correspond à la norme MPEG, en particulier la norme MPEG2.

4. Méthode selon la revendication 3, **caractérisée en ce que** les informations supplémentaires se trouvent dans l'en-tête de la couche de sections.

5. Méthode selon l'une des revendications 3 ou 4, **caractérisée en ce que** les informations supplémentaires sont uniquement utilisées dans les trames I et P.

6. Méthode selon l'une des revendications 3 à 5, **caractérisée en ce que** les informations supplémentaires sont transmises uniquement toutes les deux ou trois lignes de macrobloc.

7. Méthode selon l'une des revendications 3 à 6, **caractérisée en ce que** les informations supplémentaires concernent la référence temporelle de l'image et/ou du type d'image (trame I, P ou B) et/ou des paramètres importants pour le décodage de vecteurs de mouvement.

8. Méthode selon l'une des revendications 3 à 7, **caractérisée en ce que** les informations supplémentaires sont sélectionnées de sorte que le nombre de bits nécessaire à cette opération soit réduit par rapport au nombre de bits pour les informations correspondantes dans les couches supérieures, afin de maintenir la quantité des données supplémentaires à transmettre aussi faible que possible.

9. Dispositif pour l'encodage d'un flux de données vidéo, par des moyens (DCT, Q, VLD) de compression de données sous la forme d'une organisation hiérarchique de différentes couches, dans lequel les différentes couches comprennent une couche d'images et une couche de sections, et pour une image un certain nombre de sections est transmis, **caractérisé en ce que** des moyens (SEIEM) sont prévus, dans lesquels, pour la couche de sections, des informations supplémentaires sur le type de la couche d'images sont générées ou déterminées, les informations supplémentaires pour la resynchronisation pouvant être utilisées et les données comprimées et les informations supplémentaires étant regroupées dans un flux de données.

10. Dispositif selon la revendication 9, **caractérisé en ce que** des moyens supplémentaires de codage de Huffman (VLC) sont disposés au niveau des moyens de compression des données vidéo après les moyens de calcul de la corrélation d'images consécutives et de la corrélation au sein d'une image, dans lequel les données soumises au codage de Huffman sont envoyées vers une mémoire tampon (BUF), et **en ce que** les moyens (SEIEM), dans lesquels, pour les couches inférieures, des informations supplémentaires sur le type de la couche qui leur est supérieure sont générées, sont disposés entre une unité de codage (GHG) pour la génération de paramètres d'en-tête et la mémoire tampon (BUF).

11. Dispositif pour le décodage d'un flux de données vidéo avec des moyens (VLD, IQ, IDCT) de décompression du flux de données vidéo, qui a été codé sous la forme d'une organisation hiérarchique de différentes couches, dans lequel les différentes couches comprennent une couche d'images et une couche de sections et, pour une image, un certain nombre de sections est reçu, **caractérisé en ce que** des moyens (SEIEV) sont prévus pour déterminer les informations supplémentaires sur le type de la couche d'images contenues dans la couche de sections, les informations supplémentaires pour le resynchronisation pouvant être utilisées.

12. Dispositif selon la revendication 11, **caractérisé en ce que** les moyens de décompression des données vidéo comprennent des moyens pour le calcul de la corrélation d'images consécutives et de la corrélation au sein d'une image et des moyens pour le décodage Huffman (VLD), et le flux de données est également acheminé avant les moyens pour le décodage de Huffman (VLD) à une unité de codage (GHE), dans laquelle des paramètres d'en-tête sont déterminés, ainsi que avant les moyens (SEIEV), dans lesquels, pour les couches inférieures des informations supplémentaires sur le type de la couche qui leur est supérieure sont régénérées.
